# EUROPEAN PATENT SPECIFICATION

(11) **EP 2 570 383 B1**
(45) Date of publication and mention of the grant of the patent: **16.03.2016**
(21) Application number: 10851207.0
(22) Date of filing: 11.05.2010
(51) Int. Cl.: B82Y 30/00, C01B 19/04, C01G 21/00, C01B 19/00, C01G 21/06

(54) **METHOD FOR PREPARING QUANTUM DOTS OF LEAD SELENIDE**
VERFAHREN ZUR ERZEUGUNG VON BLEISELENID-QUANTENPUNKTEN
PROCÉDÉ DE PRÉPARATION DE POINTS QUANTIQUES DE SÉLÉNIURE DE PLOMB

(43) Date of publication of application: 20.03.2013
(73) Proprietor: Ocean's King Lighting Science&Technology Co., Ltd., Guangdong 518054 (CN)
(72) Inventor: ZHOU, Mingjie, Shenzhen, Guangdong 518054 (CN); WANG, Chun, Shenzhen, Guangdong 518054 (CN)
(74) Representative: Hubert, Philippe
(86) International application number: PCT/CN2010/072594
(87) International publication number: WO 2011/140700

(56) References cited:
- WO-A1-2009/120688
- WO-A1-2009/120688
- WO-A2-2010/029508
- CN-A- 101 070 183
- CN-A- 101 070 183
- US-A1- 2009 084 307
- US-A1- 2009 084 307
- US-A1- 2010 025 637
- YU W W ET AL: "Preparation and Characterization of Monodisperse PbSe Semiconductor Nanocrystals in a Noncoordinating Solvent", CHEMISTRY OF MATERIALS, AMERICAN CHEMICAL SOCIETY, US, vol. 16, no. 17, 24 August 2004 (2004-08-24), pages 3318-3322, XP008092382, ISSN: 0897-4756, DOI: 10.1021/CM049476Y [retrieved on 2004-07-17]
- YU, WILLIAM W. ET AL.: 'Preparation and Characterization of Monodisperse PbSe Semiconductor Nanocrystals in a Noncoordinating Solvent' CHEM. MATER. vol. 16, no. 17, 17 July 2004, pages 3318 - 3322, XP008092382

## Description

Quantum dots refer to ultra fine particles having a particle size of 1-10 nm, and are "artificial molecules" comprising 103-105 atoms bound together. Theoretical analysis indicates that when the size of a semiconductor material gradually decreases from its bulk phase to a certain critical size, the characteristic dimension of the material in three dimensions becomes comparable to or less than the de Broglie wavelength or the mean free path of the electron, thereby three-dimensionally restricting the movement of electrons in the material. In other words, the energy of electrons are quantized in three dimensions. The materials in which electrons are restricted three-dimensionally are referred to as quantum dots. The radius of quantum dots is less than or close to the Bohr radius of excitons. Therefore, the quantum dots have unique quantum size effect and surface effect and have a broad application prospects in the light emitting materials, light sensors, etc. Lead selenide (PbSe) quantum dots, as an important semiconductor quantum dot material, can be applied in optoelectronics, biophysics and fluorescence microscopy. Due to its narrow bandgap, lead selenide can be used for producing light detectors, light resistors, light emitters, injection lasers and the like. Lead selenide can also be used as a diode laser source in the mid-infrared and far infrared regions of the spectrum. Furthermore, lead selenide can be widely used in detection of atmospheric pollutions, non-invasive medical diagnostics and automatic detection of exhaust gases and waste water, etc.

Organometallic method is one of the typical methods commonly used for preparing lead selenide quantum dots. Generally, lead selenide quantum dots are prepared at high temperature in the absence of water and oxygen using organo-lead compounds, selenium powder and the like as the raw materials, and using trioctyl phosphine oxide (TOPO), triortylphosphine (TOP), tetrabutyl phosphate (TBP) and the like as the solvent/surfactant. Although high quality lead selenide quantum dots with good monodispersity may be obtained through such a synthetic method, the organic solvents used in the method such as TOPO, TOP, TBP are flammable, explosive, expensive and relatively toxic, which leads to high overall cost and is thus unfavorable for large scale production.

WO 2009/120688 A1 discloses magic size nanoclusters comprising lead and one or more chalcogens and a method for preparing PbS, PbSe, and PbTe magic size nanoclusters.

US 2009/084307 A1 discloses a method of forming monodisperse metal chalcogenide nanocrystals.

### Disclosure of the invention

### Technical problems of the invention

The technical problem to be solved by the present invention is to provide a method for preparing lead selenide quantum dots, which has the advantages of simple operations, mild experimental conditions and low-cost raw materials, to overcome the problems of the traditional method for preparing lead selenide quantum dots, such as high overall cost and severe experimental conditions.

### Technical solution of the invention

The technical solution to solve the technical problem of the present invention is to provide a method for preparing lead selenide quantum dots, which comprises the following steps:
Step 1: mixing selenium powder with octadecene, heating with stirring to dissolve the selenium powder completely, maintaining the temperature, then cooling to room temperature to obtain a stock solution of selenium;
Step 2: mixing a lead compound, oleic acid, octadecene and benzophenone, dissolving to obtain a stock solution of lead, and then maintaining the temperature at 130-190°C;
Step 3: adding the stock solution of selenium of Step 1 into the stock solution of lead of Step 2 rapidly, and maintaining the reaction temperature at 100-160°C, after cooling, quantum dots of lead selenide are initially prepared;
Step 4: adding the initially prepared lead selenide quantum dots into a mixed solution of toluene and methanol, centrifuging the obtained mixture, removing the supernatant to obtain a precipitate, and re-dissolving the precipitate in toluene to obtain a transparent solution of pure lead selenide quantum dots.

In Step 1, the temperature may be maintained for 5-10 minutes. In Step 2, the lead compound, oleic acid, octadecene and benzophenone may be heated with stirring and dissolved under inert gas protection; the inert gas may be argon, and the stirring may be magnetic stirring. In Step 2, the lead compound may be lead oxide or lead acetate. In Step 3, the reaction time may be 300 seconds. In Step 4, the volume ratio of toluene to methanol may be 1:3. In Step 4, the process of centrifuging the mixture and removing the supernatant may be repeated for at least three times.

### The beneficial effects of the invention

In the present invention, lead selenide quantum dots with different particle sizes and appearances are prepared with the method using simple lead compound and selenium powder as the raw materials by simply controlling the reaction conditions. The method of the present invention avoids the use of flammable, explosive, expensive and highly toxic compounds such as trioctylphosphine (TOP) or tributyl phosphine (TBP). Furthermore, the method of the present invention has the advantages of operation safety, simplicity, good reproducibility, and no need to use a glove box. The obtained lead selenide quantum dots have uniform distribution and very good monodispersity (size distribution of the lead selenide quantum dots is less than 10%).

### Brief description of the figures

The present invention will be further described referring to the Figures and Examples, in which:
Figure 1 is a flowchart of the method for preparing the lead selenide quantum dots of the present invention;
Figure 2 is an image of transmission electron microscopy of the lead selenide quantum dots prepared under the followings conditions: the reaction temperature is 100°C, the molar ratio of the Pb precursor to Se precursor is 3:1, and the reaction time is 5 minutes.
Figure 3 is an image of transmission electron microscopy of the lead selenide quantum dots prepared under the followings conditions: the reaction temperature is 130°C, the molar ratio of the Pb precursor to Se precursor is 2:1, and the reaction time is 5 minutes.
Figure 4 is an image of transmission electron microscopy of the lead selenide quantum dots prepared under the followings conditions: the reaction temperature is 160°C, the polar ratio of the Pb precursor to Se precursor is 1:1, and the reaction time is 5 minutes.

### Preferred embodiments of the present invention

In order to make the objects, technical solutions and advantages of the invention more apparent, the present invention will be further described referring to the Figures and the Examples. It should be understood that the embodiments described herein are merely illustration of the invention and shall not be construed to limit the invention.

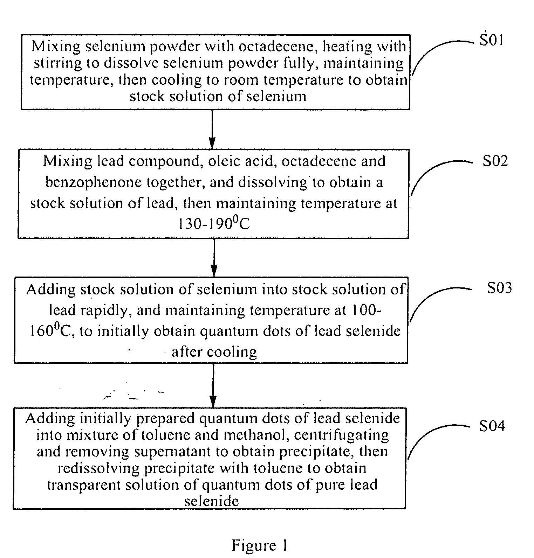

Referring to figure 1, which shows a flowchart of the method for preparing the lead selenide quantum dots of the Examples of the present invention, the method comprises the following steps:
S01: mixing selenium powder with octadecene, heating with stirring to dissolve the selenium powder completely, maintaining the temperature, then cooling to room temperature to obtain a stock solution of selenium
S02: mixing a lead compound, oleic acid, octadecene and benzophenone, dissolving to obtain a stock solution of lead, and then maintaining the temperature at 130-190°C:
S03: adding the stock solution of selenium of S01 into the stock solution of lead of S02 rapidly, and maintaining the reaction temperature at about 100-160°C, after cooping, lead selenide quantum dots are initially prepared;
S04: adding the initially prepared lead selenide quantum dots into a mixed solution of toluene and methanol, centrifuging the obtained mixture, removing the supernatant to obtain a precipitate, re-dissolving the precipitate in toluene to obtain a transparent solution of pure lead selenide quantum dots.

In the preparation method of the present invention, the temperature may be maintained for 5-10 minutes in S01. In S02, the lead compound, oleic acid, octadecene and benzophenone may be heated with stirring and dissolved under inert gas protection; the inert gas may be argon, and the stirring may be magnetic stirring. In S02, the lead compound may be lead oxide or lead acetate. In S03, the reaction time may be 300 seconds. In S04, the volume ratio of toluene to methanol may be 1:3. In S04, the process of centrifuging the mixture and removing the supernatant may be repeated for at least three times.

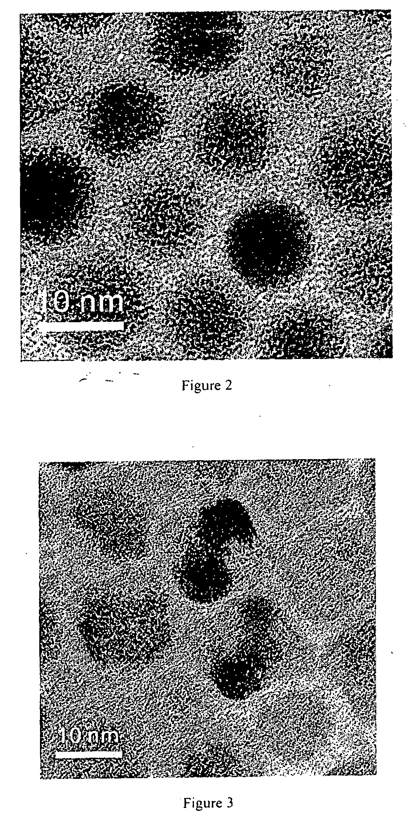

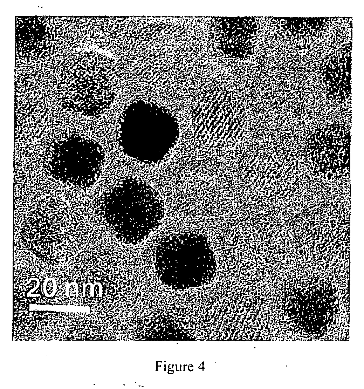

In the present, invention, lead selenide quantum dots with different particle sizes and appearances are prepared with the method using simile lead compound (such as lead oxide, lead acetate, etc.) and selenium powder as the raw material by simply controlling the reaction conditions. The method of the present invention avoids the use of flammable, explosive, expensive and highly toxic compounds such as trioctylphosphine (TOP) or tributyl phosphine (TBP). Furthermore, the method of the present invention has the advantages of operation safety, simplicity, good reproducibility, and no need to use a glove box. The obtained lead selenide quantum dots have uniform distribution and very good monodispersity (size distribution of the quantum dots of lead selenide is less than 10%). As illustrated in Figures 2 to 4, Figure 2 is an image of transmission electron microscopy of the lead selenide quantum dots prepared under the followings conditions: the reaction temperature is 100°C, the molar ratio of the Pb precursor to Se precursor is 3:1, and the reaction time is 5 minutes; Figure 3 is an image of transmission electron microscopy of the lead selenide quantum dots prepared under the followings conditions: the reaction temperature is 130°C, the molar ratio of the Pb precursor to Se precursor is 2:1, and the reaction time is 5 minutes; Figure 4 is an image of transmission electron microscopy of the lead selenide quantum dots prepared under the followings conditions: the reaction temperature is 160°C, the molar ratio of the Pb precursor to Se precursor is 1:1, and the reaction time is 5 minutes.

The lead selenide quantum dots synthesized through the preparation method above can be used in solar cells, light emitting diodes and light emitting devices, etc.

The lead selenide quantum dots prepared with different molar ratios of the precursors, different reaction temperatures, and different lead precursors are exemplified in the followings Examples.

### Example 1:

Step 1: 3mMol (millimole) of selenium powder and 5ml of octadecene (ODE) are added into a 25ml three-necked flask, which is then heated to 200°C-220°C with homogenous stirring to dissolve the selenium powder completely. The temperature is maintained for 5-10 minutes, followed by cooling to room temperature to give a stock solution of selenium.

Step 2: 1mMol (millimole) of lead oxide (PbO), SmMol of oleic acid (OA), 10mL of octadecene (ODE) and 5mMol of benzophenone are added into a 25mL three-necked flask, which is then heated to 130°C under argon protection with vigorous magnetic stirring until the materials are sufficiently dissolved to form a stock solution of lead. The temperature is maintained at 130°C,

Step 3: the stock solution of selenium is drawn with a syringe in an amount such that the molar ratio of Pb to Se in the solution is 3:1, and is added rapidly into the stock solution of lead at 130°C, After the addition, the temperature would normally decrease by 30°C. The reaction temperature is maintained at about 100°C for a reaction time of 300 seconds, after which the electrical source of the heater is shut down. After cooling, the lead selenide quantum dots are obtained.

Step 4: the obtained lead selenide quantum dots are added into a mixed solution of toluene and methanol (the volume ratio of toluene to methanol is 1:3). The obtained mixture is centrifuged and the supernatant is removed. Then the residue is added into a mixed solution of toluene and methanol (the volume ratio of toluene to methanol is 1:3) again. The process of centrifuging the mixture and removing the supernatant is repeated for two more times, and a precipitate is finally obtained. The precipitate is then dissolved in toluene to obtain a transparent solution of pure lead selenide quantum dots.

### Example 2:

Step 1: 2mMol of selenium powder and 5ml of octadecene (ODE) are added into a 25ml three-necked flask, which is then heated to 200°C-220°C with homogenous stirring to dissolve the selenium powder completely. The temperature is maintained for 5-10 minutes, followed by cooling to room temperature to give a stock solution of selenium.

Step 2: 1mMol of lead oxide (PbO), SmMol of oleic acid (OA), 10mL of octadecene (ODE) and 5mMol of benzophenone are added into a 25mL three-necked flask, which is then heated to 160°C under argon protection with vigorous magnetic stirring until the materials are sufficiently dissolved to form a stock solution of lead. The temperature is maintained at 160°C.

Step 3: the stock solution of selenium is drawn with a syringe in an amount such that the molar ratio of Pb to Se in the solution is 2:1, and is added rapidly into the stock solution of lead at 160°C: After the addition, the temperature would normally decrease by 30°C. The reaction temperature is maintained at about 130°C for a reaction time of 300 seconds, after which the electrical source is shut down. After cooling, the lead selenide quantum dots are obtained.

Step 4: the obtained lead selenide quantum dots are added into a mixed solution of toluene and methanol (the volume ratio of toluene to methanol is 1:3). The obtained mixture is centrifuged and the supernatant is removed. Then the residue is added into a mixed solution of toluene and methanol (the volume ratio of toluene to methanol is 1:3) again. The process of centrifuging the mixture and removing the supernatant is repeated for two more times, and a precipitate is finally obtained. The precipitate is then dissolved in toluene to obtain a transparent solution of pure lead selenide quantum dots.

### Example 3:

Step 1: mMol of selenium powder and 5ml of octadecene (ODE) are added into a 25ml three-necked flask, which is then heated to 200°C-220°C with homogenous stirring to dissolve the selenium powder completely. The temperature is maintained for 5-10 minutes, followed by cooling to room temperature to give a stock solution of selenium.

Step 2: 1mMo) of lead oxide (PbO), 5mMol of oleic acid (OA), 10mL of octadecene (ODE) and 5mMol of benzophenone are added into a 25mL three-necked flask, which is then heated to 190°C under argon protection with vigorous magnetic stirring until the materials are sufficiently dissolved to form a stock solution of lead. The temperature is maintained at 190°C.

Step 3: the stock solution of selenium is drawn with a syringe in an amount such that the molar ratio of Pb to Se in the solution is 1:1, and is added rapidly into the stock solution of lead at 190°C. After the addition, the temperature would normally decrease by 30°C. The reaction temperature is maintained at about J60°C, for a reaction time of 300 seconds, after which the electrical source is shut down. After cooling, the lead selenide quantum dots are obtained.

Step 4: the obtained lead selenide quantum dots are added into a mixed solution of toluene and methanol (the volume ratio of toluene to methanol is 1:3). The obtained mixture is centrifuged and the supernatant is removed. Then the residue is added into a mixed solution of toluene and methanol (the volume ratio of toluene to methanol is 1:3) again. The process of centrifuging the mixture and removing the supernatant is repeated for two more times, and a precipitate is finally obtained. The precipitate is then dissolved in toluene to obtain a transparent solution of pure lead selenide quantum dots.

### Example 4:

Step 1: 3mMol of selenium powder and 5ml of octadecene (ODE) are added into a 25ml three-necked flask, which is then heated to 200°C-220°C with homogenous stirring to dissolve the selenium powder completely. The temperature is maintained for 5-10 minutes, followed by cooling to room temperature to give a stock solution of selenium.

Step 2: 1mMol of lead acetate, 3mMol of oleic acid (OA) and 5mL of octadecene (ODE) are added into a 25mL three-necked flask, which is then heated to 130°C under argon protection with vigorous magnetic stirring until the materials are sufficiently dissolved to form a stock solution of lead. The temperature is maintained at 130°C,

Step 3: the stock solution of selenium is drawn with a syringe in an amount such that the molar ratio of Pb to Se in the solution is 3:1, and is added rapidly into the stock solution of lead at 130°C, After the addition, the temperature would normally decrease by 30°C. The reaction temperature is maintained at about 100°C for a reaction time of 300 seconds, after which the electrical source is shut down. After cooling, the lead selenide quantum dots are obtained.

Step 4: the obtained lead selenide quantum dots are added into a mixed solution of toluene and methanol (the volume ratio of toluene to methanol is 1:3).The obtained mixture is centrifuged and the supernatant is removed. Then the residue is added into a mixed solution of toluene and methanol (the volume ratio of toluene to methanol is 1:3) again. The process of centrifuging the mixture and removing the supernatant is repeated for two more times, and a precipitate is finally obtained. The precipitate is then dissolved in toluene to obtain a transparent solution of pure lead selenide quantum dots.

### Example 5:

Step 1: 2mMol of selenium powder and 5ml of octadecene (ODE) are added into a 25ml three-necked flask, which is then heated to 200°C-220°C with homogenous stirring to dissolve the selenium powder completely. The temperature is maintained for 5-10 minutes, followed by cooling to room temperature to give a stock solution of selenium.

Step 2: 1mMol of lead acetate, 3mMol of oleic acid (OA) and 5mL of octadecene (ODE) are added into a 25mL three-necked flask, which is then heated to 160°C under argon protection with vigorous magnetic stirring until the materials are sufficiently dissolved to form a stock solution of lead. The temperature is maintained at 160°C.

Step 3: the stock solution of selenium is drawn with a syringe in an amount such that the molar ratio of Pb to Se in the solution is 2:1, and is added rapidly into the stock solution of lead at 160°C. After the addition, the temperature would normally decrease by 30°C. The reaction temperature is maintained at about 130°C for a reaction time of 300 seconds, after which the electrical source is shut down. After cooling, the lead selenide quantum dots are obtained.

Step 4: the obtained lead selenide quantum dots are added into a mixed solution of toluene and methanol (the volume ratio of toluene to methanol is 1:3). The obtained mixture is centrifuged and the supernatant is removed. Then the residue is added into a mixed solution of toluene and methanol (the volume ratio of toluene to methanol is 1:3) again. The process of centrifuging the mixture and removing the supernatant is repeated for two more times, and a precipitate is finally obtained. The precipitate is then dissolved in toluene to obtain a transparent solution of pure lead selenide quantum dots.

### Example 6:

Step 1: 1mMol of selenium powder and 5ml of octadecene (ODE) are added into a 25ml three-necked flask, which is then heated to 200°C-220°C with homogenous stirring to dissolve the selenium powder completely. The temperature is maintained for 5-10 minutes, followed by cooling to room temperature to give a stock solution of selenium.

Step 2: 1mMol of lead acetate, 3mMol of oleic acid (OA) and 5mL of octadecene (ODE) are added into a 25mL three-necked flask, which is then heated to 190°C under argon protection with vigorous magnetic stirring until the materials are sufficiently dissolved to form a stock solution of lead. The temperature is maintained at 190°C.

Step 3: the stock solution of selenium is drawn with a syringe in an amount such that the molar ratio of Pb to Se in the solution is 1:1, and is added rapidly into the stock solution of lead at 190°C. After the addition, the temperature would normally decrease by 30°C. The reaction temperature is maintained at about 160°C for a reaction time of 300 seconds, after which the electrical source is shut down. After cooling, the lead selenide quantum dots are obtained.

Step 4: the obtained lead selenide quantum dots are added into a mixed solution of toluene and methanol (the volume ratio of toluene to methanol is 1:3). The obtained mixture is centrifuged and the supernatant is removed. Then the residue is added into a mixed solution of toluene and methanol (the volume ratio of toluene to methanol is 1:3) again. The process of centrifuging the mixture and removing the supernatant is repeated for two more times, and a precipitate is finally obtained. The precipitate is then dissolved in toluene to obtain a transparent solution of pure lead selenide quantum dots.

## Claims

1. A method for preparing lead selenide quantum dots, which comprises the following steps:
Step 1: mixing selenium powder with octadecene, heating with stirring to dissolve the selenium powder completely, maintaining the temperature, then cooling to room temperature to obtain a stock solution of selenium;
Step 2: mixing a lead compound, oleic acid, octadecene and benzophenone, dissolving to obtain a stock solution of lead, and then maintaining the temperature at 130-190°C;
Step 3: adding the stock solution of selenium of Step I into the stock solution of lead of Step 2 rapidly, and maintaining the reaction temperature at 100-160°C, after cooing, lead selenide quantum dots are initially prepared;
Step 4: adding the initially prepared lead selenide quantum dots into a mixed solution of toluene and methanol, centrifuging the obtained mixture, removing the supernatant to obtain a precipitate, re-dissolving the precipitate in toluene to obtain a transparent solution of pure lead selenide quantum dots.

2. The method according to claim 1, **characterized in that** the temperature is maintained for 5-10 minutes in Step 1.

3. The method according to claim 1, **characterized in that** the lead compound, oleic acid, octadecene and benzophenone are heated with stirring and dissolved under inert gas protection in Step 2.

4. The method according to claim 3, **characterized in that** the inert gas is argon, and the stirring is magnetic stirring.

5. The method according to claim 1 or 3, **characterized in that** the lead compound is lead oxide or lead acetate in Step 2.

6. The method according to claim 1, **characterized in that** the reaction time is 300 seconds in Step 3.

7. The method according to claim 1, **characterized in that** the volume ratio of toluene to methanol is 1:3 in Step 4.

8. The method according to claim 1, **characterized in that** the process of centrifuging the mixture and removing the supernatant is repeated for at least three times in Step 4.

## Patentansprüche

1. Verfahren zum Herstellen von Bleiselenidquantumspunkten, das die folgenden Schritte umfasst:
Schritt 1: Mischen von Selenpulver mit Octadecen, Erwärmen unter Rühren, um das Selenpulver vollständig aufzulösen, Beibehalten der Temperatur, dann Abkühlen auf Raumtemperatur, um eine Selenstocklösung zu erhalten,
Schritt 2: Mischen einer Bleiverbindung, Ölsäure, Octadecen und Benzophenon, Auflösen, um eine Bleistocklösung zu erhalten, und dann Beibehalten der Temperatur bei 130-190°C,
Schritt 3: schnelles Hinzufügen der Selenstocklösung aus Schritt 1 in die Bleistocklösung aus Schritt 2 und Beibehalten der Reaktionstemperatur bei 100-160°C, nach dem Abkühlen werden zunächst Bleiselenidquantumspunkte zubereitet,
Schritt 4: Hinzufügen der zunächst zubereiteten Bleiselenidquantumspunkte in einer aus Toluol und Methanol gemischten Lösung, Zentrifugieren der erhaltenen Mischung, Entfernen des Überstandes, um ein Präzipitat zu erhalten, Wiederauflösen des Präzipitates in Toluol, um eine transparente Lösung aus puren Bleiselenidquantumspunkten zu erhalten.

2. Verfahren nach Anspruch 1, **dadurch gekennzeichnet, dass** die Temperatur in Schritt 1 für 5-10 Minuten beibehalten wird.

3. Verfahren nach Anspruch 1, **dadurch gekennzeichnet, dass** die Bleiverbindung, Ölsäure, Octadecen und Benzophenon unter Rühren erwärmt werden und in Schritt 2 unter Schutzgasatmosphäre aufgelöst werden.

4. Verfahren nach Anspruch 3, **dadurch gekennzeichnet, dass** das Schutzgas Argon ist und dass das Rühren magnetisches Rühren ist.

5. Verfahren nach Anspruch 1 oder 3, **dadurch gekennzeichnet, dass** die Bleiverbindung in Schritt 2 Bleioxid oder Bleiacetat ist.

6. Verfahren nach Anspruch 1, **dadurch gekennzeichnet, dass** die Reaktionszeit in Schritt 3 300 Sekunden beträgt.

7. Verfahren nach Anspruch 1, **dadurch gekennzeichnet, dass** das Volumenverhältnis von Toluol zu Methanol in Schritt 4 1:3 beträgt.

8. Verfahren nach Anspruch 1, **dadurch gekennzeichnet, dass** das Verfahren des Zentrifugierens der Mischung und des Entfernens des Überstandes in Schritt 4 wenigstens dreimal wiederholt wird.

## Revendications

1. Procédé de préparation de points quantiques de séléniure de plomb, lequel comprend les étapes suivantes :
étape 1 : mélange de poudre de sélénium avec de l'octadécène, chauffage avec agitation pour dissoudre complètement la poudre de sélénium, maintien de la température, refroidissement subséquent jusqu'à température ambiante pour obtenir une solution de réserve de sélénium ;
étape 2 : mélange d'un composé de plomb, d'acide oléique, d'octadécène et de benzophénone, dissolution pour obtenir une solution de réserve de plomb, et maintien subséquent de la température à 130-190 °C ;
étape 3 : addition de la solution de réserve de sélénium de l'étape 1 dans la solution de réserve de plomb de l'étape 2 rapidement, et maintien de la température de réaction à 100-160 °C, après refroidissement, des points quantiques de séléniure de plomb sont initialement préparés ;
étape 4 : addition des points quantiques de séléniure de plomb initialement préparés dans une solution mixte de toluène et de méthanol, centrifugation du mélange obtenu, élimination de la matière surnageante pour obtenir un précipité, re-dissolution du précipité dans du toluène pour obtenir une solution transparente de points quantiques de séléniure de plomb pur.

2. Procédé selon la revendication 1, **caractérisé en ce que** la température est maintenue pendant 5-10 minutes dans l'étape 1.

3. Procédé selon la revendication 1, **caractérisé en ce que** le composé de plomb, l'acide oléique, l'octadécène et la benzophénone sont chauffés avec agitation et dissous sous une protection de gaz inerte dans l'étape 2.

4. Procédé selon la revendication 3, **caractérisé en ce que** le gaz inerte est l'argon, et l'agitation est une agitation magnétique.

5. Procédé selon la revendication 1 ou 3, **caractérisé en ce que** le composé de plomb est l'oxyde de plomb ou l'acétate de plomb dans l'étape 2.

6. Procédé selon la revendication 1, **caractérisé en ce que** la durée de réaction est 300 secondes dans l'étape 3.

7. Procédé selon la revendication 1, **caractérisé en ce que** le rapport volumique du toluène au méthanol est de 1:3 dans l'étape 4.

8. Procédé selon la revendication 1, **caractérisé en ce que** le procédé de centrifugation du mélange et d'élimination de la matière surnageante est répété au moins trois fois dans l'étape 4.
